# EUROPEAN PATENT APPLICATION

(11) **EP 4 109 858 A1**
(43) Date of publication of application: **28.12.2022**
(21) Application number: 22181032.8
(22) Date of filing: 24.06.2022
(51) Int. Cl.: H04L 67/12, H04L 69/22, H04L 67/565

(54) **DATA PROCESSING APPARATUS, DATA PROCESSING METHOD, AND DATA PROCESSING PROGRAM**

(30) Priority: 25.06.2021 JP 2021105840
(71) Applicant: Yokogawa Electric Corporation, Musashino-shi, Tokyo 180-8750 (JP)
(72) Inventor: Shimomura, Takanori, Musashino-shi, Tokyo, 180-8750 (JP); Sakurai, Toshihiko, Musashino-shi, Tokyo, 180-8750 (JP); Suzuki, Kimihiro, Musashino-shi, Tokyo, 180-8750 (JP)
(74) Representative: Grünecker Patent- und Rechtsanwälte PartG mbB

(57) **Abstract**

[Solving means] Provided is a data processing apparatus including a data acquisition unit configured to acquire target data including sensor data of a sensor capable of measuring a physical quantity of a measurement target and a physical address uniquely assigned to the sensor, an identification unit configured to identify a format of the sensor data based on at least a part of the physical address, and an interpretation unit configured to interpret the sensor data according to the identified format. The physical address may be a MAC address for uniquely discriminating the sensor on a network.

## Description

### BACKGROUND

### 1. TECHNICAL FIELD

The present invention relates to a data processing apparatus, a data processing method, and a data processing program.

### 2. RELATED ART

Patent document 1 describes that: "a monitoring system configured by multiple vendors ... exchanges information of mutual instruments. Information to be exchanged uses a file described in a CSV format for defining data as an interface file. The file described in the CSV format is obtained from another company and is also provided from its own company to another company".

### List of Cited References

### Patent Document

Patent Document 1: Japanese Patent Application Publication No. 2009-295090

### SUMMARY

According to a first aspect of the present invention, there is provided a data processing apparatus. The data processing apparatus may include a data acquisition unit configured to acquire target data including sensor data of a sensor capable of measuring a physical quantity of a measurement target and a physical address uniquely assigned to the sensor. The data processing apparatus may include an identification unit configured to identify a format of the sensor data based on at least a part of the physical address. The data processing apparatus may include an interpretation unit configured to interpret the sensor data according to the identified format.

The physical address may be a MAC address for uniquely discriminating the sensor on a network.

The part of the physical address may be a significant bit of the MAC address.

The significant bit of the MAC address may be an OUI for discriminating a vendor of the sensor.

The data processing apparatus may further include a format request unit configured to request the format when the format cannot be identified.

The data processing apparatus may further include a vendor identification unit configured to identify a vendor of the sensor based on a part of the physical address. The format request unit may request the format based on information of the identified vendor.

The format request unit may decide a request destination for requesting the format by using the information of the identified vendor.

The format request unit may decide a search key used for a search request of the format by using the information of the identified vendor.

The data processing apparatus may further include a report unit configured to report, when the format cannot be identified, that the format is unknown.

The data processing apparatus may further include a format storage unit configured to store the physical address and the format in association with each other.

The data processing apparatus may further include a data recording unit configured to record the interpreted sensor data in association with the physical address.

According to a second aspect of the present invention, there is provided a data processing method. The data processing method may include acquiring target data including sensor data of a sensor capable of measuring a physical quantity of a measurement target and a physical address uniquely assigned to the sensor. The data processing method may include identifying a format of the sensor data based on at least a part of the physical address. The data processing method may include interpreting the sensor data according to the identified format.

According to a third aspect of the present invention, there is provided a data processing program. The data processing program may be executed by a computer. The data processing program may cause the computer to function as a data acquisition unit configured to acquire target data including sensor data of a sensor capable of measuring a physical quantity of a measurement target and a physical address uniquely assigned to the sensor. The data processing program may cause the computer to function as an identification unit configured to identify a format of the sensor data based on at least a part of the physical address. The data processing program may cause the computer to function as an interpretation unit configured to interpret the sensor data according to the identified format.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an example of a data processing system 10 in which a data processing apparatus 100 according to the present embodiment may be included.
Fig. 2 illustrates an example of target data 200 that may be set as a process target by the data processing apparatus 100 according to the present embodiment.
Fig. 3 illustrates an example of a block diagram of the data processing apparatus 100 according to the present embodiment.
Fig. 4 illustrates an example of a flow for the data processing apparatus 100 according to the present embodiment to process the target data 200.
Fig. 5 illustrates an interpretation example of sensor data by the data processing apparatus 100 according to the present embodiment.
Fig. 6 illustrates an example of a block diagram of the data processing apparatus 100 according to a modified example of the present embodiment.
Fig. 7 illustrates an example of a flow for the data processing apparatus 100 according to the modified example of the present embodiment to process target data.
Fig. 8 illustrates an example of a computer 9900 in which a plurality of aspects of the present invention may be entirely or partially embodied.

### DESCRIPTION OF EXEMPLARY EMBODIMENTS

Hereinafter, the present invention will be described by way of embodiments of the invention, but the following embodiments are not intended to restrict the invention according to the claims. In addition, not all combinations of features described in the embodiments necessarily have to be essential to solving means of the invention.

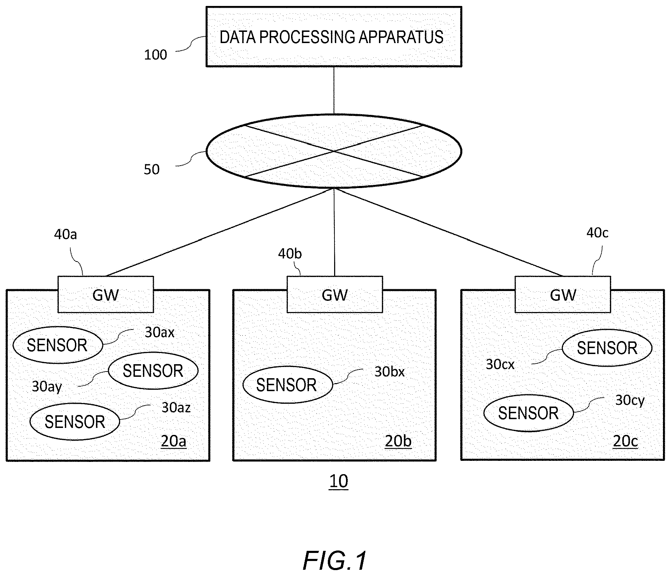

Fig. 1 illustrates an example of a data processing system 10 in which a data processing apparatus 100 according to the present embodiment may be included. In the data processing system 10, a sensor network constructed in equipment 20 is connected via a communication network 50 to the data processing apparatus 100 according to the present embodiment and various other apparatuses (not illustrated).

The equipment 20 may be, for example, a factory, an office building, a commercial building, a hospital, a school, a shop, a hotel, a road, a bridge, a tunnel, and the like. Hereinafter, a case will be described as an example where the equipment is a plant. Examples of the plant herein may include a plant for managing and controlling well sites such as a gas field and an oil field and surroundings thereof, a plant for managing and controlling power generations such as hydroelectric, thermo electric, and nuclear power generations, a plant for managing and controlling environmental power generation such as solar power and wind power, a plant for managing and controlling water and sewerage, a dam and the like, and other plants, in addition to industrial plants such as chemical and bio industrial plants. In such a plant, a large number of pieces of instruments such as a field instrument, a pump, and a tank are present. Therefore, in the equipment 20, for a purpose of a soundness diagnosis and a failure sign diagnosis of these pieces of instruments and the like, various physical quantities at various positions in the equipment 20 are to be desirably measured.

In view of the above, in the equipment 20 described above, one or more sensors 30 and a gateway 40 are provided, and a sensor network is constructed by these. In this diagram, a case is illustrated as an example in which sensors 30ax to 30az and a gateway 40a are provided in a equipment 20a such that a sensor network a is constructed by these, a sensor 30bx and a gateway 40b are provided in a equipment 20b such that a sensor network b is constructed by these, and sensors 30cx to 30cy and a gateway 40c are provided in a equipment 20c such that a sensor network c is constructed by these. Herein, the equipment 20a to 20c are collectively referred to as the equipment 20, the sensors 30ax to 30cy are collectively referred to as the sensor 30, and the gateways 40a to 40c are collectively referred to as the gateway 40.

The sensor 30 can measure a physical quantity of a measurement target. The sensor 30 may be, for example, an Internet of Things (IoT) sensor, and as an example, may be an Industrial IoT (IIoT) sensor used for industrial fields such as manufacturing, transport, and logistics. However, the sensor is not limited to this. The sensor 30 may be an operational technology (OT) sensor or the like (for example, a sensor for process control (measurement)) which is installed in an OT area.

The sensor 30 is configured to measure a physical quantity such as a temperature, a pressure, and a flow rate, for example, in the equipment 20. The sensor 30 transmits sensor data including measured data together with discrimination information of itself to the gateway 40.

The gateway 40 is a network instrument configured to connect different networks to each other. The gateway 40 relays communication between, for example, a sensor network constructed in the equipment 20 in which the gateway itself is provided and the communication network 50. When the discrimination information of the sensor 30 and the sensor data are acquired from the sensor 30, the gateway 40 supplies data obtained by adding thereto, for example, a header, discrimination information of itself, and a timestamp to the communication network 50.

The communication network 50 is a network configured to connect a plurality of computers. The communication network 50 may be, for example, a global network in which a plurality of computer networks are connected to each other, and as an example, may be the Internet or the like using Internet protocols.

In this manner, the data processing system 10 can collect data sensed by the plurality of the sensors 30 from the plurality of equipment 20 via the gateway 40.

In recent years, various physical quantities are to be desirably measured such as a humidity, a brightness, an acceleration, a magnetic field, an image, and a sound in addition to the temperature, the pressure, the flow rate in the equipment 20, and the like. However, it is difficult for a single vendor to provide various types of diverse sensors as described above. Therefore, a case may be considerable where the sensors 30 to be set as sensor data collection targets by the data processing system 10 are a mixture of various sensors fabricated by a plurality of vendors. In the data processing system 10 that has become the multi-vendor data processing system as described above, the sensor data to be collected is represented by using a unique format for each of the vendors. Note that the format mentioned herein means a data description format for describing elements included in certain data in what order, at what length, and in what mode of representation (such as an integer or a character string). In this case, it is preferably found out in advance which kind of formats are used for all the sensors 30 set as the targets. However, since the countless sensors 30 fabricated by a plurality of vendors are present in the equipment 20 such as the plant, for example, it takes efforts and is also difficult to prepare a format for each of all the sensors 30 in advance.

In view of the above, the data processing apparatus 100 according to the present embodiment is configured to identify a format of sensor data based on a physical address of the sensor 30, and interpret the sensor data according to the identified format.

Herein, the physical address is to refer to a position associated and assigned to some physical entity or a position in a physical structure of an apparatus among discrimination codes and location information (addresses) of the instrument and the data. When the instrument is to be discriminated on a network, a unique discrimination code for each individual piece physically recorded at the time of fabrication for uniquely discriminating and distinguishing the apparatus from other individual pieces is referred to as a physical address. In particular, in the case of the instrument to be connected to an IP network such as the Internet, a media access control (MAC) address is assigned for each instrument as the physical address described above.

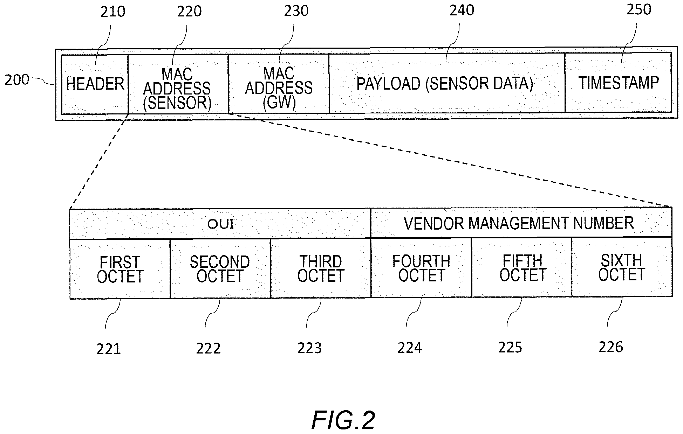

Fig. 2 illustrates an example of target data 200 that may be set as a process target by the data processing apparatus 100 according to the present embodiment. The target data 200 described above is represented in a comma separated value (CSV) format, for example, and has a plurality of fields partitioned by commas (in this diagram, a first field 210 to a fifth field 250).

The first field 210 represents a header. The second field 220 represents a MAC address of the sensor 30. The third field 230 represents a MAC address of the gateway 40. The fourth field 240 represents a payload. The fifth field 250 represents a timestamp added by the gateway 40.

In the target data 200 described above, the sensor data of the sensor 30 is included in the payload corresponding to the fourth field 240. However, as described above, the sensor data is represented by using a unique format for each of the vendors. Then, for example, in a case where the sensor data includes measured temperature data and humidity data, when it is not clear in what order these data pieces are described, not clear at which length each of the data pieces is described, not clear in what mode of representation each of the data pieces is described, or the like, it is not possible to interpret which digit represents the temperature data and which digit represents the humidity data.

In view of the above, the data processing apparatus 100 according to the present embodiment identifies the format of the sensor data based on at least a part of the physical address of the sensor 30, and in this case, based on at least a part of the MAC address of the sensor 30.

In general, the MAC address is a 48-bit address and represented by using numbers in hexadecimal form. The MAC address is partitioned into six octets including a first octet 221 to a sixth octet 226 as in, for example, 01:23:45:67:89:AB, or FE:DC:BA:98:76:54.

Herein, the first octet 221, the second octet 222, and the third octet 223 are referred to as an organizationally unique identifier (OUI), and represent an ID of a vendor that has fabricated the instrument. In addition, the fourth octet 224, the fifth octet 225, and the sixth octet 226 represent a vendor management number corresponding to a unique code registered in the vendor. In more detail, the fourth octet 224 represents an model ID, and the fifth octet and the sixth octet represent a serial ID, in general. Therefore, the vendor can be identified by looking up three most significant octets (the first octet 221, the second octet 222, and the third octet 223) of the MAC address. That is, it is possible to identify which vendor has fabricated the sensor 30. Furthermore, it is possible to identify the model ID too by looking up up to the fourth octet 224. That is, it is possible to identify which vendor has fabricated which model of the sensor 30.

The data processing apparatus 100 according to the present embodiment focuses attention on the above described features to identify the format of the sensor data based on at least a part of the physical address of the sensor 30, and interpret the sensor data according to the identified format.

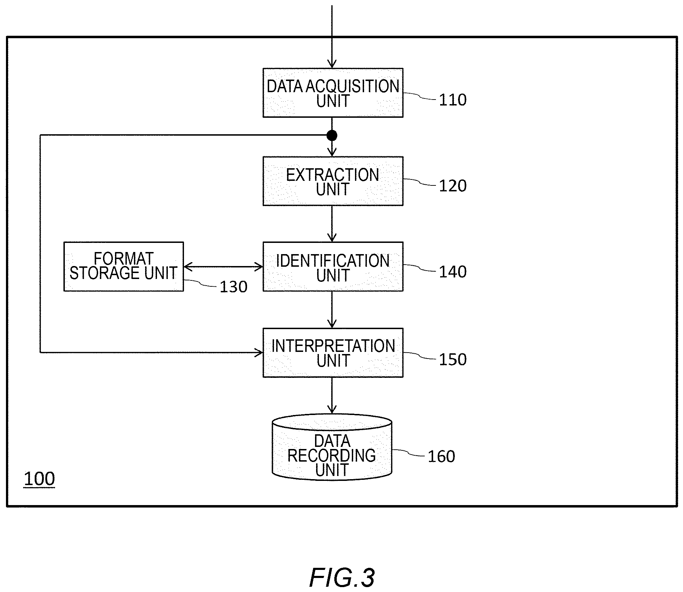

Fig. 3 illustrates an example of a block diagram of the data processing apparatus 100 according to the present embodiment. The data processing apparatus 100 according to the present embodiment may be a computer such as a personal computer (PC), a tablet type computer, a smartphone, a workstation, a server computer, or a general purpose computer, or may also be a computer system in which a plurality of computers are connected to each other. The above described computer system is also a computer in broad sense. In addition, the data processing apparatus 100 may be implemented by one or more virtual computer environments executable in the computer. Instead of this, the data processing apparatus 100 may be a dedicated computer designed for processing data, or may also be dedicated hardware achieved by a dedicated circuit. In addition, when the data processing apparatus 100 can be connected to the Internet, the data processing apparatus 100 may be achieved by cloud computing.

The data processing apparatus 100 includes a data acquisition unit 110, an extraction unit 120, a format storage unit 130, an identification unit 140, an interpretation unit 150, and a data recording unit 160. Note that these blocks are respectively functionally separated functional blocks, and a configuration may be adopted where these blocks are not necessarily need to be matched with actual device configurations. That is, even when a single block is illustrated in this diagram, a configuration may be adopted where it is not necessarily configured by a single device. In addition, even when separate blocks are illustrated in this diagram, a configuration may be adopted where these blocks are not necessarily configured by separate devices.

The data acquisition unit 110 is configured to acquire the target data 200 including the sensor data of the sensor 30 capable of measuring the physical quantity of the measurement target and the physical address uniquely assigned to the sensor 30. For example, the data acquisition unit 110 acquires the target data 200 including the sensor data of the sensor 30, and the MAC address of the sensor 30 from the equipment 20 via the communication network 50. However, the sensor is not limited to this. The data acquisition unit 110 may acquire the target data 200 via a user input, or may acquire the target data 200 by reading the target data from various types of memory devices. The data acquisition unit 110 supplies the acquired target data 200 to the extraction unit 120 and the interpretation unit 150.

The extraction unit 120 is configured to extract the physical address. For example, the extraction unit 120 extracts the physical address of the sensor 30 set as the target from the target data acquired by the data acquisition unit 110. The extraction unit 120 supplies the extracted physical address to the identification unit 140.

The format storage unit 130 is configured to store the physical address and the format in association with each other. For example, the format storage unit 130 stores the MAC address of the sensor 30 and the format of the sensor data in association with each other. Note that the above described association may be, for example, input by a user in advance when the data processing apparatus 100 according to the present embodiment is introduced, or may be added during an operation of the data processing apparatus 100 according to the present embodiment.

The identification unit 140 is configured to identify the format of the sensor data. For example, the identification unit 140 determines whether the format corresponding to the physical address extracted by the extraction unit 120 is already stored in the format storage unit 130. When the format corresponding to the physical address set as the target is already stored, the identification unit 140 identifies that the stored format is a format to be used to interpret the sensor data set as the target. On the other hand, when the format corresponding to the physical address set as the target is not already stored, the identification unit 140 identify a format of the sensor data based on a part of the physical address set as the target. As an example, the identification unit 140 searches the format storage unit 130 using a part of the physical address set as the targets as a search key, and selects a physical address in common with the part of the physical address. The identification unit 140 then estimates that the format associated with the selected physical address as the format to be used to interpret the sensor data set as the target. The identification unit 140 supplies information indicating the identified format to the interpretation unit 150. In addition, the identification unit 140 supplies the physical address set as the target and the identified format to the format storage unit 130. In response to this, the format storage unit 130 adds and stores the association between the physical address set as the target and the identified format.

The interpretation unit 150 is configured to interpret the sensor data according to the identified format. For example, the interpretation unit 150 interprets the sensor data from the target data acquired by the data acquisition unit 110 according to the format identified by the identification unit 140. The interpretation unit 150 supplies the interpreted sensor data to the data recording unit 160 together with the physical address set as the target.

The data recording unit 160 is configured to record the interpreted sensor data in association with the physical address. For example, the data recording unit 160 records the sensor data interpreted by the interpretation unit 150 in association with the physical address set as the target. A method for the data processing apparatus 100 including the above described functional blocks to process the target data will be described in detail by using a flow.

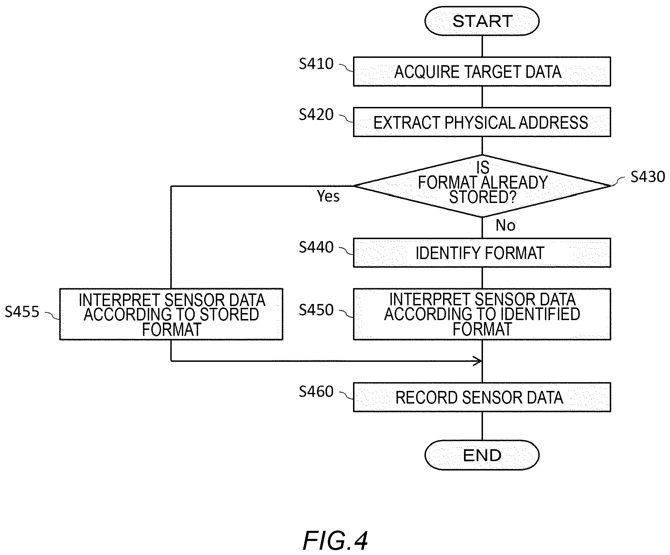

Fig. 4 illustrates an example of the flow for the data processing apparatus 100 according to the present embodiment to process the target data 200.

In step S410, the data processing apparatus 100 acquires the target data. For example, the data acquisition unit 110 acquires the target data 200 including the sensor data of the sensor 30 capable of measuring the physical quantity of the measurement target and the physical address uniquely assigned to the sensor 30. As an example, the data acquisition unit 110 acquires the target data 200 including the sensor data of the sensor 30, and the MAC address of the sensor 30 from the equipment 20 via the communication network 50. Herein, the physical address may be a MAC address for uniquely discriminating the sensor 30 on the network as described above. The data acquisition unit 110 supplies the acquired target data to the extraction unit 120 and the interpretation unit 150.

In step S420, the data processing apparatus 100 extracts the physical address. For example, the extraction unit 120 extracts the physical address of the sensor 30 set as the target, that is, herein, the MAC address of the sensor 30, from the target data acquired in step S410. The extraction unit 120 supplies the extracted physical address to the identification unit 140.

In step S430, the data processing apparatus 100 determines whether the format is already stored. For example, the identification unit 140 determines whether the format corresponding to the physical address extracted in step S420 is already stored in the format storage unit 130. When it is determined that the format is not already stored (No), the data processing apparatus 100 advances the process to step S440.

In step S440, the data processing apparatus 100 identifies the format. For example, the identification unit 140 searches the format storage unit 130 using a part of the physical address extracted in step S420 as a search key, and selects a physical address in common with the part of the physical address. A part of the physical address described above may be a significant bit of the MAC address, for example. In particular, the significant bit of the MAC address described above may be an OUI for discriminating a vendor of the sensor. That is, the identification unit 140 selects a physical address in common with three most significant octets (the first octet 221, the second octet 222, and the third octet 223) of the MAC address extracted in step S420. The identification unit 140 then estimates that the format associated with the select physical address is a format to be used to interpret the sensor data set as the target.

Herein, OUIs being common to each other mean, namely, that the vendors that have fabricated the sensors 30 are the same. As described above, the sensor data is represented by using a unique format for each of the vendors. In view of the above, the data processing apparatus 100 according to the present embodiment is configured to discovery the sensor fabricated by the same vendor using the OUI corresponding to the significant bits of the MAC address as the search key, and under an estimation that the sensor 30 set as the target also uses the same format as the discovered sensor, identify the discovered format as the format to be used to interpret the sensor data set as the target. The identification unit 140 supplies information indicating the thus identified format to the interpretation unit 150. In addition, the identification unit 140 may supply the physical address set as the target and the identified format to the format storage unit 130. In response to this, the format storage unit 130 may add and store the association between the physical address set as the target and the identified format.

In step S450, the data processing apparatus 100 interprets the sensor data according to the identified format. For example, the interpretation unit 150 interprets the sensor data from the target data acquired in step S410 according to the format identified in step S450. The interpretation unit 150 supplies the interpreted sensor data to the data recording unit 160 together with the physical address set as the target.

On the other hand, when it is determined in step S430 that the format is already stored (Yes), the data processing apparatus 100 advances the process to step S455. In step S455, the data processing apparatus 100 interprets the sensor data according to the stored format. For example, when the format corresponding to the physical address extracted in step S420 is already stored in the format storage unit 130, the identification unit 140 identifies the format as a format to be used to interpret the sensor data set as the target. The identification unit 140 then supplies the information indicating the format identified in this manner to the interpretation unit 150. In response to this, the interpretation unit 150 interprets the sensor data from the target data acquired in step S410 according to the stored format. The interpretation unit 150 then supplies the interpreted sensor data together with the physical address set as the target to the data recording unit 160.

In step S460, the data processing apparatus 100 records the sensor data. For example, the data recording unit 160 records the sensor data interpreted in step S450 or step S455 in association with the corresponding physical address.

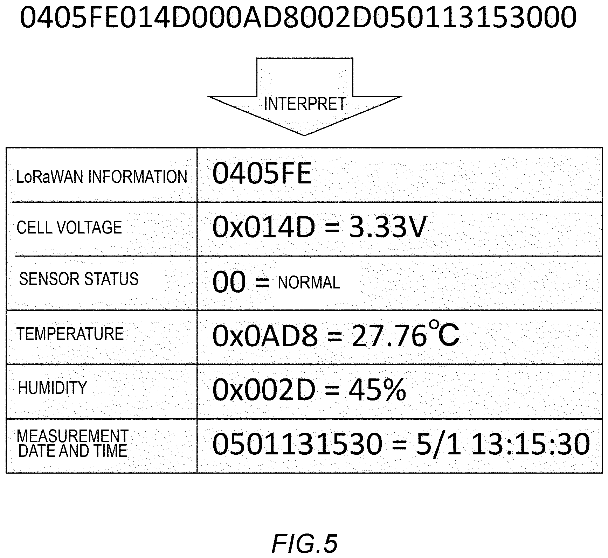

Fig. 5 illustrates an interpretation example of the sensor data by the data processing apparatus 100 according to the present embodiment. For example, it is assumed that the data acquisition unit 110 has acquired the target data including the sensor data = "0405FE014D000AD8002D050113153000" of the sensor 30 set as the target. As described above, such sensor data is represented by using a unique format for each of the vendors. Therefore, when the format of the sensor 30 set as the target is not known, it is not possible to interpret which digit in the sensor data means what.

In response to this, the data processing apparatus 100 according to the present embodiment identifies the format of the sensor 30 set as the target based on a part of the physical address, in more detail, the OUI corresponding to the three most significant octets of the MAC address. As an example, the identification unit 140 identifies the format of the sensor 30 set as the target. It is assumed that the interpretation unit 150 then understands, according to the identified format, that first to sixth digits of the sensor data set as the target represent LoRaWAN (registered trademark) information in hexadecimal form, seventh to tenth digits represent a cell voltage to a second decimal place in hexadecimal form, eleventh and twelfth digits represent a sensor status in binary form, thirteenth to sixteenth digits represent temperature data to a second decimal place in hexadecimal form, seventeenth to twentieth digits represent humidity data using an integer in hexadecimal form, twenty-first to thirtieth digits represent measurement date and time in decimal form, and thirty-first and thirty-second digits represent padding bits. In this case, the interpretation unit 150 can interpret that "LoRaWAN information" is "0405FE", a "cell voltage" is "0x014D = 3.33 V", a "sensor status" is "00 = normal", a "temperature" is "0x0AD8 = 27.76°C", a "humidity" is "0x002D = 45%", and "measurement date and time" are "0501131530 = May 1, 13th hour, 15th minute, 30th second". With this configuration, the data recording unit 160 can record the thus interpreted sensor data in association with the physical address of the sensor 30 set as the target.

In this manner, the sensor data is represented by using a unique format for each of the vendors. In the above described case, it is preferably found out in advance which format is used for all the sensors 30 set as the targets. However, in the data processing system 10 that has become the multi-vendor data processing system, it takes efforts and is also difficult to prepare a format for each of all the sensors 30 in advance. In addition, when it is not possible to identify the format, it is not possible to interpret which digit in the sensor data means what.

In view of the above, the data processing apparatus 100 according to the present embodiment identifies the format of the sensor data based on at least a part of the physical address of the sensor 30, and interprets the sensor data according to the identified format. With this configuration, the data processing apparatus 100 according to the present embodiment can discover the sensor using the same format as the sensor 30 set as the target, and interpret the sensor data of the sensor 30 set as the target by using the same format as the discovered sensor. Therefore, the data processing apparatus 100 according to the present embodiment can interpret the sensor data by estimating the format without preparing the formats in advance for all the sensors 30.

Herein, the physical address described above may be a MAC address for uniquely discriminating the sensor 30 on a network. In general, data of an application is different or each of applications, and there may be a case where information for identifying the sensor 30 is not included. However, the MAC address is indispensable information for communication, and in addition, it is already known to some extent that what kind of information is included in which octet. Therefore, in accordance with the data processing apparatus 100 according to the present embodiment, it is possible to identify the format based on the information that can be reliably acquired without depending on the application by identifying the format based on the above described information.

In addition, a part of the physical address described above may be a part of the MAC address, in particular, the OUI for discriminating the vendor of the sensor 30. With this configuration, in accordance with the data processing apparatus 100 according to the present embodiment, it is possible to identify the format to be used to interpret the sensor data set as the target under the estimation that the sensor fabricated by the same vendor uses the same format.

In addition, the data processing apparatus 100 according to the present embodiment stores the physical address and the format in association with each other. With this configuration, the data processing apparatus 100 according to the present embodiment can previously store the association between the physical address and the format, and also additionally store the association identified during the operation. At this time, for example, the data processing apparatus 100 may store the format common to the sensors fabricated by the same vendor, and it is not required to store the format for each of all the sensors.

In addition, the data processing apparatus 100 according to the present embodiment records the interpreted sensor data in association with the physical address. With this configuration, in accordance with the data processing apparatus 100 according to the present embodiment, the sensor data can be recorded while meaning of each digit is interpreted instead of simply recording the data string as it is.

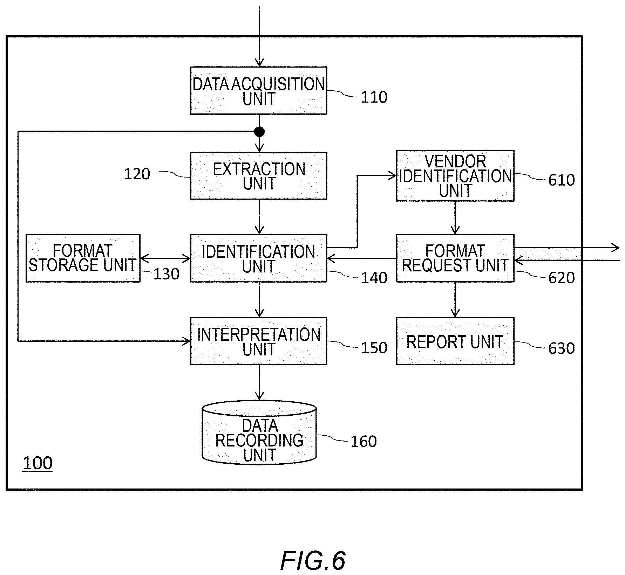

Fig. 6 illustrates an example of a block diagram of the data processing apparatus 100 according to a modified example of the present embodiment. In Fig. 6, a component part having a same function and configuration of Fig. 3 is assigned with a same reference sign, and also description thereof will be omitted hereinafter except for differences. The data processing apparatus 100 according to the present modified example further has a function for requesting a format when the format cannot be identified in addition to the above described function that the data processing apparatus 100 has. The data processing apparatus 100 according to the present modified example further includes a vendor identification unit 610, a format request unit 620, and a report unit 630.

In the data processing apparatus 100 according to the present modified example, the identification unit 140 is configured to supply the physical address extracted by the extraction unit 120 to the vendor identification unit 610 when the format cannot be identified.

The vendor identification unit 610 is configured to identify a vendor of the sensor 30 based on a part of the physical address. For example, the vendor identification unit 610 identifies the vendor of the sensor 30 based on the physical address supplied from the identification unit 140, that is, herein, the OUI corresponding to the three most significant octets of the MAC address. The vendor identification unit 610 supplies information of the identified vendor to the format request unit 620.

The format request unit 620 is configured to request for a format when the format cannot be identified. For example, the format request unit 620 requests the format based on the information of the vendor identified by the vendor identification unit 610. When the format is acquired in response to the format request, the format request unit 620 supplies the format to the identification unit 140. On the other hand, when the format cannot be acquired in response to the format request, the format request unit 620 informs the report unit 630 that the format cannot be acquired.

When the format cannot be identified, the report unit 630 is configured to report that the format is unknown. For example, when it is informed that the format cannot be acquired from the format request unit 620, the report unit 630 reports that the format is unknown.

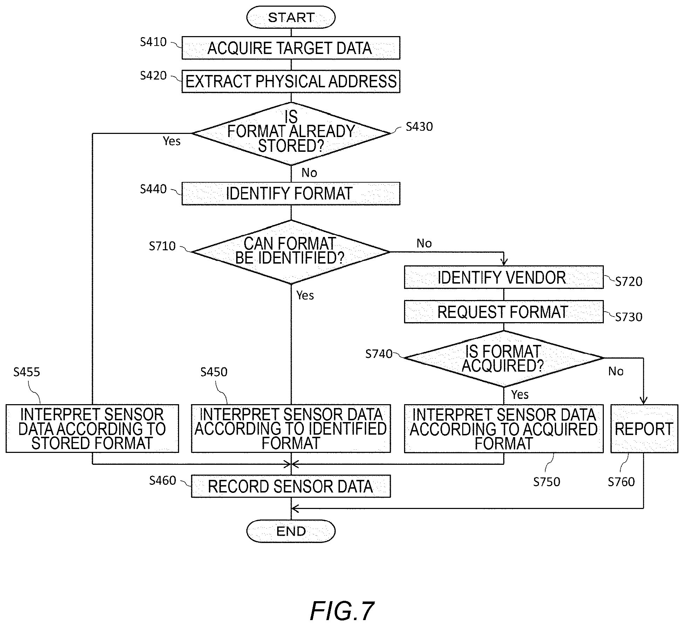

Fig. 7 illustrates an example of a flow for the data processing apparatus 100 according to the modified example of the present embodiment to process the target data. In Fig. 7, a same process as that of Fig. 4 is assigned with a same reference sign, and also description thereof will be omitted hereinafter except for differences. In this flow, step S710 to step S760 are further included.

In step S710, the data processing apparatus 100 determines whether the format can be identified. When it is determined that the format can be identified (Yes), the data processing apparatus 100 advances the process to step S450. On the other hand, when it is determined that the format cannot be identified (No), the data processing apparatus 100 advances the process to step S720.

In step S720, the data processing apparatus 100 identifies a vendor. For example, when the format cannot be identified, the identification unit 140 supplies the physical address extracted in step S420 to the vendor identification unit 610. The vendor identification unit 610 then identifies the vendor of the sensor 30 based on the physical address supplied from the identification unit 140, that is, herein, the OUI corresponding to the three most significant octets of the MAC address. At this time, the vendor identification unit 610 may include a database in which a list of OUIs and vendors are prestored, and identify the vendor by searching the database. Instead of this or in addition to this, the vendor identification unit 610 may identify the vendor by accessing a site of an external organization for managing OUIs (for example, Institute of Electrical and Electronics Engineers (IEEE)). The vendor identification unit 610 supplies information of the identified vendor to the format request unit 620.

In step S730, the data processing apparatus 100 requests a format. For example, the format request unit 620 request a format based on the information of the vendor identified in step S720. At this time, the format request unit 620 may decide a request destination for requesting the format by using the information of the identified vendor. As an example, the format request unit 620 may decide a point of contact of the vendor that has fabricated the sensor 30 set as the target based on the information of the vendor identified in step S720, and transmit a format request to the point of contact as a destination. Instead of this or in addition to this, the format request unit 620 may decide a search key to be used for a search request of the format by using the information of the identified vendor. For example, the format request unit 620 may identify a name of the vendor that has fabricated the sensor 30 set as the target based on the vendor information identified in step S720, and perform the search request for the format using the name of the vendor as a search key. As an example, it is assumed that Company A is identified as the vendor that has fabricated the sensor 30 set as the target. In this case, the format request unit 620 may transmit "vendor name = Company A" corresponding to the search key as the format request to an external database having formats of sensors of each company for each of a plurality of vendors. With this configuration, the format request unit 620 may request the external database to return the format of the sensor of Company A. The format request unit 620 requests the format in this manner when the format cannot be identified.

In step S740, the data processing apparatus 100 determines whether the format is acquired. For example, the format request unit 620 determines whether the format is acquired in response to the format request in step S730. When it is determined that the format is acquired, the data processing apparatus 100 advances the process to step S750.

In step S750, the data processing apparatus 100 interprets the sensor data according to the acquired format. For example, the format request unit 620 supplies information indicating the acquired format to the interpretation unit 150. In response to this, the interpretation unit 150 interprets the sensor data from the target data acquired in step S410 according to the format acquired in step S740.

On the other hand, when it is determined in step S740 that the format is not acquired, the format request unit 620 informs the report unit 630 of that effect. The data processing apparatus 100 then advances the process to step S760.

In step S760, the data processing apparatus 100 performs reporting. For example, when the format cannot be identified, the report unit 630 reports that the format is unknown. As an example, when it is informed that the format cannot be acquired in step S740, the report unit 630 reports that the format is unknown. At this time, the report unit 630 may perform reporting by displaying information that the format is unknown on a monitor, may perform reporting by outputting an alarm or a sound, or may perform reporting by transmitting a message to another apparatus or functional unit.

In this manner, when the format cannot be identified, the data processing apparatus 100 according to the present modified example requests the format. With this configuration, in accordance with the data processing apparatus 100 according to the present modified example, even when the format cannot be identified in its own apparatus, the format can be acquired by requesting another apparatus for the format.

At this time, the data processing apparatus 100 according to the present modified example identifies the vendor of the sensor based on a part of the physical address, and requests the format based on the information of the identified vendor. With this configuration, in accordance with the data processing apparatus 100 according to the present modified example, instead of randomly requesting the format, it is possible to efficiently request the format based on the identified vendor.

In more detail, the data processing apparatus 100 according to the present modified example may decide the request destination for requesting the format by using the information of the identified vendor, or may decide the search key used for a search request of the format. With this configuration, in accordance with the data processing apparatus 100 according to the present modified example, it is possible to automatically perform a setting at the time of the search for the format.

In addition, the data processing apparatus 100 according to the present modified example reports that the format is unknown when the format cannot be identified. With this configuration, in accordance with the data processing apparatus 100 according to the present modified example, since the user can be aware that the format is unknown, it is possible to provide a trigger for the user to input the format.

Note that the embodiments described above may be modified in various forms or applied. For example, in the above description, a case has been described as an example where the data processing apparatus 100 identifies the format based on the three most significant octets of the MAC address, but is not limited to this. As an example, the data processing apparatus 100 may identify the format based on four most significant octets of the MAC address. For example, when a plurality of sets of the three most significant octets of the MAC addresses, that is, a plurality of sets of physical addresses having a common OUI are discovered, the identification unit 140 may select a physical address in common with up to the fourth octet. The identification unit 140 may then estimate that the format associated with the selected physical address is a format to be used to interpret the sensor data set as the target.

Herein, being in common with up to fourth octet of the MAC address may mean, namely, that the vendors that have fabricated the sensors 30 are the same, and also models of the sensors 30 are the same. Therefore, the data processing apparatus 100 may identify the format further based on the fourth octet in addition to the OUI corresponding to the three most significant octets of the MAC address. As described above, when the format is identified based on the OUI, the data processing apparatus 100 identifies the format under the estimation that the sensors fabricated by the same vendor use the same format. However, even when the sensors are fabricated by the same vendor, if the models are different, the formats of the sensors may be different. Therefore, to cope with the above described case too, the data processing apparatus 100 may estimate that the format of the sensor even with the same model in addition to the same vendor is a format to be used to interpret the sensor data set as the target.

Moreover, various embodiments of the present invention may be described with reference to flowcharts and block diagrams, whose blocks may represent (1) steps of processes in which operations are executed or (2) sections of apparatuses responsible for executing operations. Certain steps and sections may be implemented by dedicated circuit, programmable circuit supplied with computer readable instructions stored on computer readable media, and/or processors supplied with computer readable instructions stored on computer readable media. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer readable medium may include any tangible device that can store instructions to be executed by a suitable device, and as a result, the computer readable medium having instructions stored thereon comprises an article of manufacture including instructions which can be executed to create means for performing operations specified in the flowcharts or block diagrams. Examples of computer readable media may include an electronic storage medium, a magnetic storage medium, an optical storage medium, an electromagnetic storage medium, a semiconductor storage medium, and the like. More specific examples of computer readable media may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disc read only memory (CD-ROM), a digital versatile disk (DVD), a BLU-RAY (registered trademark) disk, a memory stick, an integrated circuit card, and the like.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer readable instructions may be provided to a processor of a general purpose computer, special purpose computer, or other programmable data processing apparatus, or to a programmable circuit, locally or via a local area network (LAN), wide area network (WAN) such as the Internet, or the like, to execute the computer readable instructions to create means for performing operations specified in the flowcharts or block diagrams. Examples of processors include computer processors, processing units, microprocessors, digital signal processors, controllers, microcontrollers, and the like.

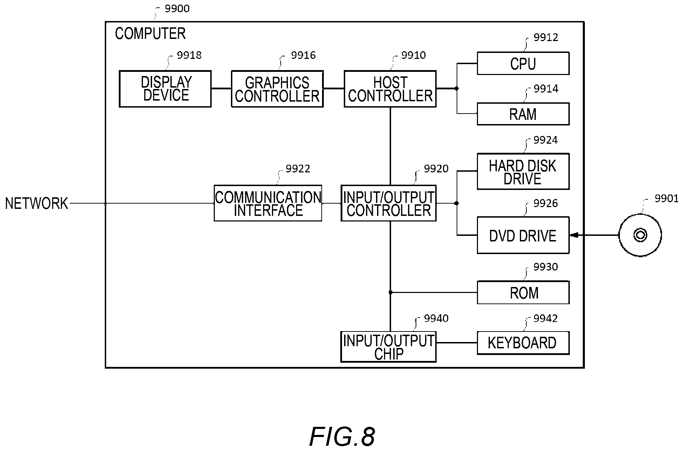

Fig. 8 illustrates an example of a computer 9900 in which a plurality of aspects of the present invention may be entirely or partially implemented. A program that is installed in the computer 9900 can cause the computer 9900 to function as or perform operations associated with apparatuses according to the embodiments of the present invention or one or more sections thereof, or perform the operations or the one or more sections, and/or cause the computer 9900 to perform processes according to the embodiments of the present invention or steps of the processes. Such a program may be executed by the CPU 9912 to cause the computer 9900 to perform certain manipulations associated with some or all of the blocks of flowcharts and block diagrams described herein.

The computer 9900 according to the present embodiment includes a CPU 9912, a RAM 9914, a graphics controller 9916, and a display device 9918, which are mutually connected by a host controller 9910. The computer 9900 also includes an input/output unit such as a communication interface 9922, a hard disk drive 9924, a DVD drive 9926, and an IC card drive, which are connected to the host controller 9910 via an input/output controller 9920. The computer also includes legacy input/output units such as a ROM 9930 and a keyboard 9942, which are connected to the input/output controller 9920 through an input/output chip 9940.

The CPU 9912 operates according to programs stored in the ROM 9930 and the RAM 9914, thereby controlling each unit. The graphics controller 9916 obtains image data generated by the CPU 9912 on a frame buffer or the like provided in the RAM 9914 or in itself, and causes the image data to be displayed on the display device 9918.

The communication interface 9922 communicates with other electronic devices via a network. The hard disk drive 9924 stores programs and data used by the CPU 9912 within the computer 9900. The DVD drive 9926 reads the programs or the data from the DVD-ROM 9901, and provides the hard disk drive 9924 with the programs or the data via the RAM 9914. The IC card drive reads programs and data from an IC card, and/or writes programs and data into the IC card.

The ROM 9930 stores therein a boot program or the like executed by the computer 9900 at the time of activation, and/or a program depending on the hardware of the computer 9900. The input/output chip 9940 may also connect various input/output units via a parallel port, a serial port, a keyboard port, a mouse port, or the like to the input/output controller 9920.

A program is provided by computer readable media such as the DVD-ROM 9901 or the IC card. The program is read from the computer readable media, installed into the hard disk drive 9924, RAM 9914, or ROM 9930, which are also examples of computer readable media, and executed by the CPU 9912. The information processing described in these programs is read into the computer 9900, resulting in cooperation between a program and the above-mentioned various types of hardware resources. An apparatus or method may be constituted by realizing the manipulation or processing of information in accordance with the usage of the computer 9900.

For example, when communication is executed between the computer 9900 and an external device, the CPU 9912 may execute a communication program loaded onto the RAM 9914, and instruct the communication interface 9922 to process the communication based on the processing written in the communication program. Under control of the CPU 9912, the communication interface 9922 reads transmission data stored in a transmission buffering region provided in a recording medium such as the RAM 9914, the hard disk drive 9924, the DVD-ROM 9901, or the IC card, and transmits the read transmission data to the network, or writes reception data received from the network to a reception buffering region or the like provided on the recording medium.

In addition, the CPU 9912 may cause all or a necessary portion of a file or a database to be read into the RAM 9914, the file or the database having been stored in an external recording medium such as the hard disk drive 9924, the DVD drive 9926 (DVD-ROM 9901), the IC card, etc. and perform various types of processes on data on the RAM 9914. The CPU 9912 may then write back the processed data to the external recording medium.

Various types of information, such as various types of programs, data, tables, and databases, may be stored in the recording medium to undergo information processing. The CPU 9912 may perform various types of processing on the data read from the RAM 9914, which includes various types of manipulations, processing of information, condition judging, conditional branch, unconditional branch, search/replace of information, etc., as described throughout this disclosure and designated by an instruction sequence of programs, and writes the result back to the RAM 9914. In addition, the CPU 9912 may search for information in a file, a database, etc., in the recording medium. For example, when a plurality of entries, each having an attribute value of a first attribute associated with an attribute value of a second attribute, are stored in the recording medium, the CPU 9912 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The program or software modules described above may be stored in the computer readable media on or near the computer 9900. In addition, a recording medium such as a hard disk or a RAM provided in a server system connected to a dedicated communication network or the Internet can be used as the computer readable media, thereby providing the program to the computer 9900 via the network.

While the embodiments of the present invention have been described, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: data processing system
20: equipment
30: sensor
40: gateway
100: data processing apparatus
110: data acquisition unit
120: extraction unit
130: format storage unit
140: identification unit
150: interpretation unit
160: data recording unit
610: vendor identification unit
620: format request unit
630: report unit
9900: computer
9901: DVD-ROM
9910: host controller
9912: CPU
9914: RAM
9916: graphics controller
9918: display device
9920: input/output controller
9922: communication interface
9924: hard disk drive
9926: DVD drive
9930: ROM
9940: input/output chip
9942: keyboard

## Claims

1. A data processing apparatus comprising:
a data acquisition unit configured to acquire target data including sensor data of a sensor capable of measuring a physical quantity of a measurement target and a physical address uniquely assigned to the sensor;
an identification unit configured to identify a format of the sensor data based on at least a part of the physical address; and
an interpretation unit configured to interpret the sensor data according to the identified format.

2. The data processing apparatus according to claim 1, wherein the physical address is a MAC address for uniquely discriminating the sensor on a network.

3. The data processing apparatus according to claim 2, wherein the part of the physical address is a significant bit of the MAC address.

4. The data processing apparatus according to claim 3, wherein the significant bit of the MAC address is an OUI for discriminating a vendor of the sensor.

5. The data processing apparatus according to any one of claims 1 to 4, further comprising:
a format request unit configured to request the format when the format cannot be identified.

6. The data processing apparatus according to claim 5, further comprising:
a vendor identification unit configured to identify a vendor of the sensor based on a part of the physical address, wherein
the format request unit is configured to request the format based on information of the identified vendor.

7. The data processing apparatus according to claim 6, wherein the format request unit is configured to decide a request destination for requesting the format by using the information of the identified vendor.

8. The data processing apparatus according to claim 6, wherein the format request unit is configured to decide a search key used for a search request of the format by using the information of the identified vendor.

9. The data processing apparatus according to any one of claims 1 to 8, further comprising:
a report unit configured to report, when the format cannot be identified, that the format is unknown.

10. The data processing apparatus according to any one of claims 1 to 9, further comprising:
a format storage unit configured to store the physical address and the format in association with each other.

11. The data processing apparatus according to any one of claims 1 to 10, further comprising:
a data recording unit configured to record the interpreted sensor data in association with the physical address.

12. A data processing method comprising:
acquiring target data including sensor data of a sensor capable of measuring a physical quantity of a measurement target and a physical address uniquely assigned to the sensor;
identifying a format of the sensor data based on at least a part of the physical address; and
interpreting the sensor data according to the identified format.

13. A data processing program that, when executed by a computer, causes the computer to function as:
a data acquisition unit configured to acquire target data including sensor data of a sensor capable of measuring a physical quantity of a measurement target and a physical address uniquely assigned to the sensor;
an identification unit configured to identify a format of the sensor data based on at least a part of the physical address; and
an interpretation unit configured to interpret the sensor data according to the identified format.
